# EUROPÄISCHE PATENTSCHRIFT

(11) **EP 0 626 751 B1**
(45) Veröffentlichungstag und Bekanntmachung des Hinweises auf die Patenterteilung: **18.03.1998**
(21) Anmeldenummer: 94107003.9
(22) Anmeldetag: 04.05.1994
(51) Int. Cl.: H02N 1/00

(54) **Mikromechanisches Bauteil und Verfahren zu seiner Herstellung**
Micromechanical element and method for producing the same
Elément micromécanique et procédé pour sa production

(30) Priorität: 19.05.1993 DE 4316856
(43) Veröffentlichungstag der Anmeldung: 30.11.1994
(73) Patentinhaber: SIEMENS AKTIENGESELLSCHAFT, 80333 München (DE)
(72) Erfinder: Zettler, Thomas, Dr., D-81737 München (DE)

(56) Entgegenhaltungen:
- IEEE PROCEEDINGS OF THE INTERNATIONAL CONFERENCE ON SOLID STATE SENSORS AND ACTUATORS: SAN FRANCISCO, Juni 1991, NEW YORK Seiten 739 - 742 L.Y. CHEN; N.C. MACDONALD 'A selective CVD tungsten process for micromotors'
- IEEE INTERNATIONAL ELECTRON DEVICES MEETING: SAN FRANCISCO, Dezember 1990, NEW YORK Seiten 2641 - 2644 K. SUZUKI 'Single crystal silicon micro-actuators'

## Beschreibung

Die Erfindung betrifft ein mikromechanisches Bauteil mit einer statischen mikromechanischen Struktur und einer beweglichen mikromechanischen Struktur sowie ein Verfahren zu seiner Herstellung.

Bei der Herstellung von mikromechanischen Bauteilen für den Einsatz als Aktoren und Sensoren besteht ein großes Interesse an Prozessen, die mit der Fertigung von integrierten Schaltungen, insbesondere aus Silizium, kompatibel sind. Nur eine Kompatibilität der Herstellungsprozesse erlaubt die Integration von Mikromechanik und Ansteuerschaltungen in Mikrosystemen. Diese ist auch dann wichtig, wenn bestehende Halbleiterfertigungsanlagen gleichzeitig zur Herstellung von mikromechanischen Strukturen genutzt werden sollen. Für solche Mikrosysteme kommen vor allem mikromechanische Bauteile in Betracht, deren Funktion auf elektrostatischen Anziehungskräften, insbesondere zwischen Kondensatorflächen mit variablen Abstand, beruht, da hierbei grundsätzlich eine geeignete Kombination von leitenden und nichtleitenden Schichten, die auch bei integrierten Schaltungen eingesetzt werden, ausreichend ist.

Derartige mikromechanische Bauteile bestehen aus statischen und beweglichen mikromechanischen Strukturen, ein typisches Anwendungsbeispiel ist ein Motor (mit Drehachse und Stator als statischer bzw. Rotor als beweglicher mikromechanischer Struktur) oder ein Getriebe (mit Drehachse bzw. Rotor).

Bei der Herstellung z.B. eines Motors sind folgende Probleme zu lösen:
Da die elektrostatischen Kräfte mit wachsendem Abstand abnehmen, sind möglichst kleine Abstände zwischen Rotor und Stator anzustreben. Dies und die allgemeinen mechanischen Toleranzanforderungen verlangen geringe Justiertoleranzen der zugehörigen Fotoebenen. Weiterhin ist eine hoch auflösende Lithografie wichtig. Daraus resultiert als weitere Anforderung eine möglichst weitgehende Planarität der Oberflächen während des Herstellungprozesses. Dies ist auch für die nachfolgenden Prozeßschritte von Bedeutung.
Da die elektrostatischen Kräfte und das Drehmoment eines Mikromotors mit der Fläche zunehmen, sollte der Herstellungsprozeß eine möglichst große Dicke von Rotor und Stator in Richtung der Drehachse erlauben (auch bei einem Getriebe ohne elektrischen Anschluß ist eine große Schichtdicke wünschenswert, um die mechanische Stabilität sicherzustellen). Für die verlustarme Funktion des Motors ist weiterhin ein kleiner spezifischer Widerstand des leitfähigen Materials wichtig. Allgemein sollte ein Prozeß möglichst einfach sein, und wenige Fotoebenen erfordern.

Es sind unter anderem folgende Herstellprozesse bekannt:
a) Polysilizium Center-Pin Prozeß (M. Mehrengany et al., J. Micromech. Microeng., Vol. 1, 73, 1991).
   Dieser Prozeß erfordert bei der Herstellung der mikromechanischen Strukturen im Anschluß an die Herstellung der integrierten Schaltung zusätzliche Polysilizium-Abscheidungen nach dem Metallisierungskomplex. Im Fall, daß der Center-Pin Prozeß vor der Metallisierung der integrierten Schaltung durchgeführt werden soll, ergibt sich das Problem, die beweglichen Strukturen freizuätzen, und gleichzeitig die Isolation der Metallisierung zu schützen. Es werden vier Fotoebenen benötigt. Nachteilig sind die hohen Topographiestufen, über denen die dritte und vierte Maskenebene erzeugt werden müssen, sowie der Einsatz von dotiertem Polysilizium, welches einen spezifischen Widerstand von etwa 2mΩcm und eine praktisch realisierbare Schichtdicke von weniger als 5µm aufweist.
b) Polysilizium Flange-Prozeß (M.Mehrengany, Y.-C.Tai, J.Micromech. Microeng., Vol.1, 73, 1991)
   Dieser Prozeß ähnelt dem Prozeß a), wobei außerdem die zweite Maskenebene über einer Topographiestufe erzeugt werden muß.
c) Polysilizium LOCOS-Prozeß (L. S. Tavrow et al., Sensors and Actuators A, 35 (1992) S. 33.)
   Der Prozeß sieht vor, die beweglichen mikromechanischen Strukturen auf einer planen LOCOS-Oxidschicht herzustellen, wobei der Oxidationsschritt wegen der Temperaturbelastung nur vor der Transistorherstellung erfolgen kann. Bei vollständiger Durchführung des Prozesses vor Herstellung der integrierten Schaltung ergibt sich eine ungünstige Topologie für die Nachfolgeschritte sowie das Problem, die mikromechanischen Elemente während der Herstellung der integrierten Schaltung zu schützen. Bei einer ineinander verzahnten Herstellung muß das Problem der Freiätzung des Rotors bei gleichzeitigem Schutz der Schaltungsisolationsoxide gelöst werden. Ein weiterer Nachteil ist die Verwendung von sechs Maskenebenen, von denen einige über hohen Topografiestufen erzeugt werden müssen.
d) Selektiver Wolfram-Prozeß (L.Y.Chen, N.C.MacDonald, TRANSDUCERS '91., Int. Conf. on Solid-State Sensors and Actuators. San Francisco, 24-27 June 1991, IEEE Cat. No. 91CH2817-5, 739, 1991).
   Dieser Prozeß kann im Anschluß an einen Schaltungs-Fertigungsprozeß durchgeführt werden, wobei das Problem der Kontaktierung des Motors und des Schutzes der Metallisierungs-Isolation durch das vorgeschlagene Verfahren nicht gelöst werden. Rotor und Stator werden zwar in der gleichen Maskenebene und die Drehachse dazu selbstjustiert erzeugt, der Prozeß benötigt jedoch fünf Maskenebenen, von denen die dritte, vierte und fünfte über hohen Topographiestufen erzeugt werden müssen. Durch die Abscheidung von Wolfram in Gräben können hohe Schichtdicken eines gut leitfähigen Materials hergestellt werden.

Die Erfindung hat zur Aufgabe, ein mikromechanisches Bauteil mit hoher mechanischer bzw. elektrischer Belastbarkeit und Zuverlässigkeit zu schaffen, sowie ein Herstellverfahren anzugeben, das einfach und mit der Fertigung von integrierten Schaltungen vollständig kompatibel ist.

Diese Aufgabe wird durch die Merkmale der Ansprüche 1 und 8 gelöst.

Die Erfindung beruht darauf, die beweglichen und statischen mikromechanischen Strukturen aus derselben Schicht oder Mehrfachschicht herzustellen, also z.B. bei einem Motor auch die Drehachse. Die statischen Strukturen werden dann mit Hilfe von mechanischen und/oder elektrischen Verbindungsmitteln mit einem Substrat verbunden, wobei die Verbindungsmittel aus einer weiteren Schicht (als Fixierschicht bezeichnet) gebildet werden. Durch eine einzige Fotomaske wird sowohl die Lage der mikromechanischen Strukturen als auch der Verbindungsmittel definiert. Mit dieser (ersten) Fotomaske werden Vertiefungen (Gräben) in eine auf dem Substrat aufgebrachte Schicht, insbesondere Isolationsschicht geätzt, wobei in den Gräben die mikromechanischen Strukturen hergestellt werden und einige der zwischen den Gräben verbleibenden Stege teilweise als "Platzhalter" für die in einem späteren Verfahrensschritt herzustellenden Verbindungsmittel dienen.

Mit Hilfe einer zweiten Fotomaske, deren Justierung unkritisch ist, werden die "Platzhalter-Stege" an vorgegebenen Stellen entfernt, wobei der Ätzprozeß vorzugsweise das Substrat freilegt. Die zweite Fotomaske bestimmt also die genaue Lage der Verbindungsmittel innerhalb der Platzhalter-Stege. Abhängig von der Art der beabsichtigten Verbindung (z.B. nur eine mechanische) und von den auf das Substrat aufgebrachten Schichten kann der Ätzprozeß auch früher gestoppt werden, z.B. auf einer auf dem Substrat aufgebrachten Schicht.

Die mit dem Ätzprozeß entstandenen Löcher werden mit der Fixierschicht aufgefüllt; falls die Fixierschicht ganzflächig aufgebracht wird, ist eine dritte Fotomaske zu ihrer Strukturierung notwendig. In diesem Fall kann die Strukturierung so erfolgen, daß gleichzeitig die beweglichen Strukturen gegen Herausfallen gesichert sind.

Der Prozeß eignet sich für die Herstellung beliebiger mikromechanischer Bauteile mit statischen und beweglichen mikromechanischen Strukturen, also z.B. Motoren, Getriebe und linear bewegliche Strukturen. Die Verbindungsmittel können an beliebiger Stelle vorgesehen werden, also auch am Rand einer statischen Struktur. Soll eine elektrische Verbindung hergestellt werden, wird ein entsprechender "Platzhalter-Steg" über einem Kontaktgebiet im Substrat mit Hilfe der ersten Fotomaske hergestellt, wobei die Justierung eine ausreichende elektrische Kontaktfläche gewährleisten muß.

Die mikromechanischen Strukturen und Verbindungsmittel können aus einem der beabsichtigten Verwendung angepaßten und mit der Silizium-Technologie verträglichen Material hergestellt werden. Für einen Motor ist besonders ein in einem CVD-Verfahren abgeschiedenes Wolfram als Material für Rotor, Stator und Drehachse geeignet, da es eine gute Leitfähigkeit besitzt und in großer Dicke und konform abgeschieden werden kann. Daher wird es bevorzugt auch als Fixierschicht eingesetzt, wobei auch eine selektive Abscheidung durchgeführt werden kann.

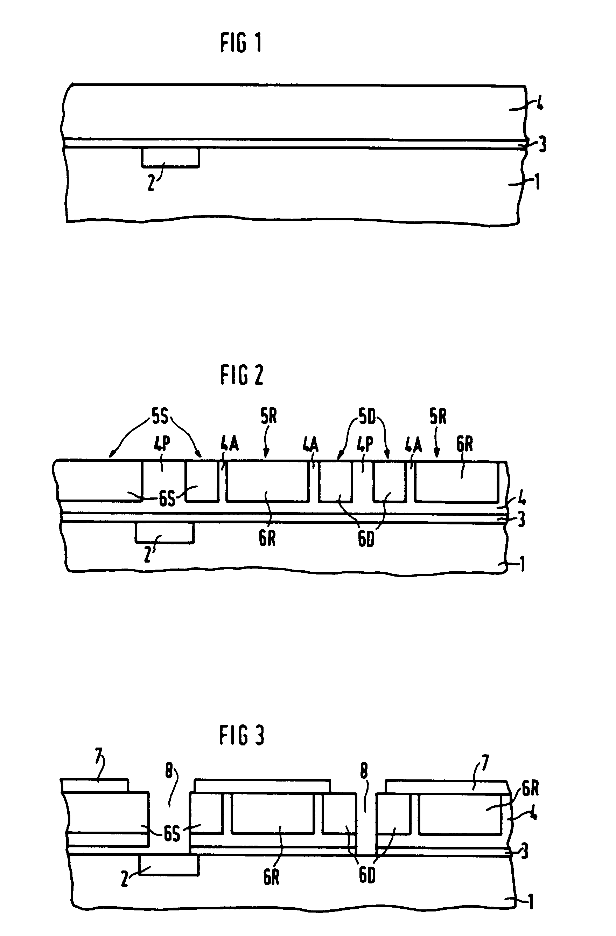

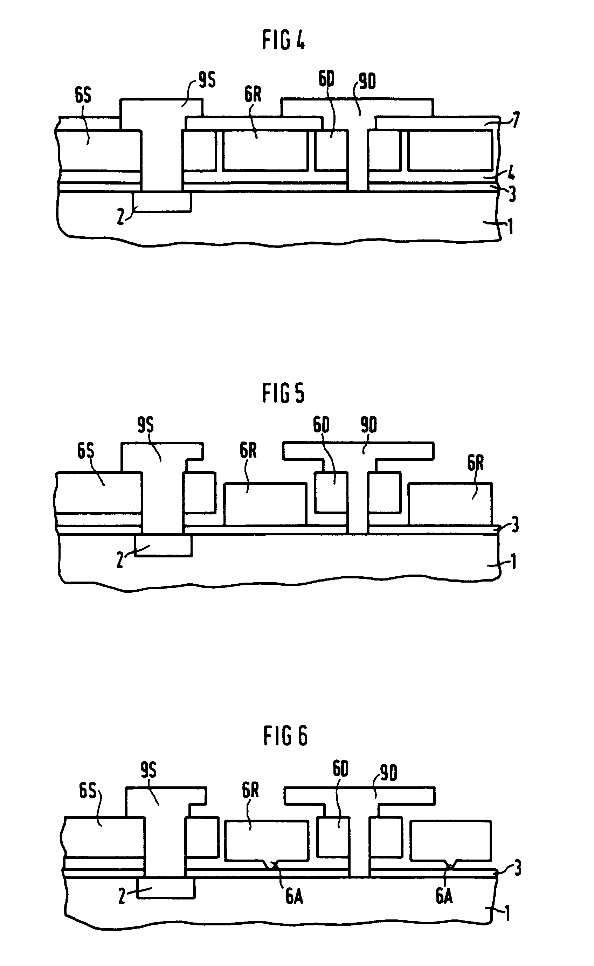

Die Erfindung wird im folgenden anhand eines in den Figuren dargestellten Ausführungsbeispiels näher erläutert. Die Figuren 1 bis 5 zeigen anhand eines Querschnitts durch ein Substrat das erfindungsgemäße Herstellungsverfahren am Beispiel eines mikromechanischen Motors. Figur 6 zeigt ein weiteres Ausführungsbeispiel eines erfindungsgemäßen Motors.

Figur 1: Auf ein Substrat 1, das auch bereits fertiggestellte Strukturen oder Schaltungen enthalten kann und ein Kontaktgebiet 2 an seiner Oberfläche aufweist, wird gemäß dieses Ausführungsbeispiels eine untere Isolationsschicht 3 aus Siliziumnitrid (ca. 60 nm) und eine obere Isolationsschicht 4 aus Siliziumoxid (z.B. BPSG, ca. 2500 nm) aufgebracht. Die obere Isolationsschicht 4 besitzt z.B. durch ein Schleifverfahren (Chemical Mechanical Polishing, CMP) eine weitgehend planare Oberfläche, vorzugsweise ist auch bereits das Substrat 1 durch ein Schleifverfahren oder ein anderes Verfahren planarisiert.

Figur 2: Mittels einer ersten Fotomaske (nicht dargestellt) werden Gräben 5 in die obere Isolationsschicht 4 geätzt, die zur Aufnahme der statischen und beweglichen mikromechanischen Strukturen dienen. Dabei werden Gräben 5S für den Stator, 5R für den Rotor und 5D für die Drehachse vorgesehen, wobei die Gräben für Rotor und Drehachse im wesentlichen ringförmig und konzentrisch verlaufen.
Der Graben 5D für die Drehachse weist in seinem Innern (nicht notwendig zentralsymmetrisch) einen Steg 4P auf, der als "Platzhalter" für ein später herzustellendes Verbindungsmittel zur Verbindung der Drehachse mit dem Substrat 1 dient. Der Graben 5S für den Stator weist einen entsprechenden "Platzhalter-Steg" 4P auf, der oberhalb des Kontaktgebietes 2 angeordnet ist. Dieser Platzhalter-Steg kann auch entfallen, wenn der Stator an seinem Rand mit dem Substrat 1 verbunden werden soll (das noch zu erläuternde Loch für das Verbindungsmittel wird dann an den Statorrand anschließend geätzt).
Zwischen dem Graben 5R für den Rotor einerseits und den Gräben 5S, 5D für Stator oder Drehachse andererseits befinden sich Stege 4A, die den Abstand zwischen den entsprechenden Strukturen definieren. Diese Stege sind vorzugsweise möglichst schmal (abhängig von Lithografie und Ätzprozessen).

Nach Entfernen der Lackmaske wird ganzflächig ein Material für die mikromechanischen Strukturen, vorzugsweise CVD-Wolfram mit unterliegender Haftschicht aus Titan/Titannitrid, abgeschieden, welches die Gräben füllt. Die Entfernung des überschüssigen Materials kann durch einen Schleifprozeß (CMP) oder durch anisotropes Rückätzen erfolgen. Im Falle des anisotropen Rückätzens (ohne Zusatzmaske) darf die kleinste Ausdehnung des Grabens nicht größer sein als etwa das zweifache der Grabentiefe. Sollen dennoch größere Wolframflächen hergestellt werden, so müssen diese netzartig zerlegt werden.
Nach Entfernen des überschüssigen Materials sind Stator 6S, Rotor 6R und Drehachse 6D fertiggestellt, wobei die Drehachse und evtl. auch der Stator als Hohlkörper zur Aufnahme eines Verbindungsmittels ausgebildet sind.

Figur 3: Eine Zwischenschicht 7 vorzugsweise aus Siliziumoxid (z.B. BPSG von etwa 100 nm Dicke) wird ganzflächig aufgebracht. Mit einer zweiten Fotomaske (nicht dargestellt) auf der Zwischenschicht 7 werden mindestens die Stege 4A überdeckt, wobei die Platzhalterstege 4P über eine ausreichend große Fläche, vorzugsweise ganz, freibleiben. Im Hinblick auf eine gute mechanische und elektrische Verbindung ist es vorteilhaft, wenn die Lackmaske auch Teile von Stator 6S und Drehachse 6D freiläßt.
Mit der zweiten Fotomaske werden Locher 8 in die Zwischenschicht 7 und in die Platzhalterstege 4P geätzt; es wird ein anisotroper, zu Wolfram selektiver Ätzprozeß eingesetzt, so daß die Oberflächen von Stator und Drehachse teilweise freigelegt werden. Die Siliziumoxidschicht 4 und die unterliegende Siliziumnitridschicht 3 werden bis zum Substrat 1 bzw. bis zum Kontaktgebiet 2 geätzt.

Figur 4: Durch Abscheiden einer Fixierschicht 9 werden die entstandenen Löcher mindestens bis zur Oberkante der Zwischenschicht 7 aufgefüllt. Vorzugsweise wird Wolfram (ggf. mit unterliegender Haftschicht) als Fixierschicht ganzflächig abgeschieden und dann mit einer dritten Lackmaske (nicht dargestellt) zu Verbindungsmitteln 9S, 9D strukturiert, mit denen Stator 6S und Drehachse 6D elektrisch bzw. mechanisch mit dem Kontaktgebiet 2 und dem Substrat 1 verbunden werden. Ein Teil der strukturierten Fixierschicht (9S oder vorzugsweise zwecks Vermeidung von Kurzschlüssen 9D) überdeckt dabei den Rotor 6S teilweise.

Figur 5: Nach Entfernen der Lackmaske werden die Zwischenschicht 7 und die obere Isolationsschicht 4 selektiv zur unteren Isolationsschicht 3 weggeätzt, dies ist bei den angegebenen Materialien auf naßchemischen Wege einfach möglich. Dadurch wird der Rotor 6R freigelegt und beweglich, während Stator 6S und Drehachse 6D mindestens über die Verbindungsmittel 9S, 9D in der unteren Isolationsschicht 3 verankert bleiben. Je nach Dauer des Ätzprozesses ist auch die obere Isolationsschicht 4 unterhalb der statischen Strukturen nicht völlig entfernt. Wie in der Figur erkennbar ist, ist der Rotor 6R durch das Verbindungsmittel 9D gegen Herausfallen gesichert.

Figur 6: Die beweglichen Strukturen, hier also der Rotor 6R, können auch auf Abstandshaltern 6A mit geringer Auflagefläche gelagert werden (sogenannte "Bushings", wie sie auch im Stand der Technik beschrieben sind). Dazu werden nach Abscheidung der oberen Isolationsschicht 4 entsprechende Gräben mit einer Zusatzmaske in der oberen Isolationsschicht 4 strukturiert. Diese werden dann beim anisotropen Ätzen der Graben 5 weiter versenkt und später mit Wolfram zur Bildung der Abstandshalter 6A aufgefüllt.

In Abwandlung des erläuterten Ausführungsbeispiels können die Löcher zur Aufnahme der Verbindungsmittel auch nur bis in die untere Isolationsschicht 3 oder bis zu ihrer Oberfläche geätzt werden, wenn kein elektrischer Anschluß an das Substrat vorgesehen ist und eine ausreichende mechanische Stabilität des Bauteils gewährleistet ist, z.B. durch eine große Auflagefläche der Verbindungsmittel. Andererseits kann auch bis in das Substrat hineingeätzt werden. Ferner ist die untere Isolationsschicht 3 nicht notwendig, wenn der Ätzprozeß zur Freilegung der beweglichen mikromechanischen Strukturen selektiv zum Substrat 1 sowie gegebenenfalls zum Kontaktgebiet 2 erfolgt und die geforderte Stabilität der elektrischen bzw. mechanischen Verbindung gewährleistet ist. Im Bereich eines rein mechanischen Bauteils, d. h. ohne direkten elektrischen Anschluß, können anstelle der unteren und/oder oberen Isolationsschicht 3, 4 auch andere Schichten gewählt werden. Dabei muß die obere Schicht 4 selektiv zum Material der mikromechanischen Strukturen 6 und zur unteren Schicht 3 oder dem Substrat 1 ätzbar sein.

Ein besonderer Vorteil des Prozesses ist seine gute Vertraglichkeit mit Fertigungsprozessen für integrierte Halbleiterschaltungen. Die verwendeten Materialien und Prozeßschritte sind aus Metallisierungsprozessen für integrierte Schaltungen bekannt. Der beschriebene 3-Masken-Prozeß kann direkt im Anschluß an einen konventionellen Metallisierungsprozeß ausgeführt werden. Die untere Isolationsschicht 3 schützt das Intermetalloxid während des Ätzschrittes zur Freilegung des Rotors. Der Prozeß löst auch das Problem der Kontaktierung von Mikromotoren und anderen mikromechanischen Elementen. Das Kontaktgebiet 2 stellt einen Anschluß zu den Verbindungsmitteln und damit den statischen mikromechanischen Strukturen her. In gleicher Weise können Padöffnungen der integrierten Schaltung von außen angeschlossen werden.

Der vorgestellt Prozeß benötigt keine Röntgenlithographie und Montage wie der LIGA-Prozeß (P.Bley, W.Bacher, W.Menz, J.Mohr, Microelektronic Engineering 13, 509, 1991) und keine zusätzlichen Polysilizium-Abscheidungen wie die eingangs erläuterten Prozesse. Der Schutz des Intermetalloxids und die Motorkontaktierung ist im Gegensatz zu allen anderen Prozessen einfach durchzuführen und Teil des Prozeßkonzeptes.

Alle statischen und beweglichen mikromechanischen Strukturen werden in der gleichen Maskenebene erzeugt und sind deshalb genau justiert. Das Fehlen von Justiertoleranzen erlaubt die Herstellung von Mikromotoren mit kleinstem Luftspalt und hohem Drehmoment. Alle Maskenebenen werden -im Gegensatz zu allen bekannten Prozessen- auf planarer Oberfläche erzeugt, so daß die Auflösung der Lithographie optimal ausgenutzt werden kann.

Bei Verwendung von (CVD-Wolfram) sind sehr große Schichtdicken (insbesondere größer als 5µm) realisierbar, so daß z.B. Motoren mit hohem Drehmoment hergestellt werden können. Trotz der hohen Schichtdicken treten keine fotolithographischen Probleme auf, da das Metall in Gräben abgeschieden wird und eine planare Oberfläche hinterläßt. Der Prozeß erlaubt die Verwendung von sehr gut leitfähigem Material (Wolfram, Aluminium, andere Metalle) für die mikromechanischen Strukturen und für die Verbindungsmittel.

Der Prozeß ist sehr gut beherrschbar und sehr viel einfacher als alle bekannten Prozesse, insbesondere werden nur drei Fotoebenen benötigt. Auch bei Einführung einer Zusatzmaske zur Herstellung von Abstandshaltern werden nur gleich viel Masken wie bei den einfachsten Polysiliziumprozessen benötigt.

## Patentansprüche

1. Mikromechanisches Bauteil mit
- einer statischen mikromechanischen Struktur (6S, 6D),
- einer beweglichen mikromechanischen Struktur (6R),
- Mittel (9S, 9D) zur mechanischen und/oder elektrischen Verbindung der statischen Struktur (6S, 6D) mit einem Substrat (1), die aus einer Fixierschicht (9) gebildet sind, und
- einer auf dem Substrat (1) aufgebrachten Schicht oder Mehrfachschicht (6), aus der die statische und die bewegliche mikromechanische Struktur gebildet sind.

2. Mikromechanisches Bauteil nach Anspruch 1,
**dadurch gekennzeichnet**, daß die bewegliche mikromechanische Struktur (6R) durch die Verbindungsmittel (9S, 9D) gegen Herausfallen gesichert ist.

3. Mikromechanisches Bauteil nach einem der Ansprüche 1 oder 2, **dadurch gekennzeichnet**,
daß das Substrat (1) mit einer Isolationsschicht (3, 4) mit im wesentlichen planarer Oberfläche abgedeckt ist und ein Kontaktgebiet (2) für das elektrische Verbindungsmittel (9S) aufweist.

4. Mikromechanisches Bauteil nach einem der Ansprüche 1 bis 3, **dadurch gekennzeichnet**, daß die bewegliche mikromechanische Struktur (6R) auf dem Substrat (1) oder auf der Isolationsschicht (3) auf Abstandshaltern (6A) mit geringer Auflagefläche gelagert ist.

5. Mikromechanisches Bauteil nach einem der Ansprüche 1 bis 4, **dadurch gekennzeichnet**, daß die mikromechanischen Strukturen (6S, 6D, 6R) und/oder die Verbindungsmittel (9S, 9D) im wesentlichen aus Wolfram bestehen.

6. Mikromechanisches Bauteil nach einem der Ansprüche 1 bis 5, **gekennzeichnet durch**
einen Motor als mikromechanisches Bauteil mit einer als Hohlkörper ausgebildeten Drehachse (6D) und einem Stator (6S) als statischer mikromechanischer Struktur und mit einem Rotor (6R) als beweglicher mikromechanischer Struktur, die aus derselben leitenden Schicht oder Mehrfachschicht (6) gebildet sind, und
eine weitere leitende Schicht oder Mehrfachschicht als Fixierschicht (9), die die Oberfläche der Drehachse (6D) mindestens teilweise überdeckt und durch den Hohlkörper hindurch mit dem Substrat verbunden ist, und die die Oberfläche des Stators mindestens teilweise bedeckt und mit dem Kontaktgebiet (2) im Substrat (1) verbunden ist.

7. Mikromechanisches Bauteil nach einem der Ansprüche 1 bis 5, **gekennzeichnet durch**
ein Getriebe als mikromechanisches Bauteil mit einer als Hohlkörper ausgebildeten Drehachse als statischer mikromechanischer Struktur und mit einem Rotor (6R) als beweglicher mikromechanischer Struktur und
eine leitende oder nichtleitende Schicht als Fixierschicht (9), die die Oberfläche der Drehachse (6D) mindestens teilweise bedeckt und durch den Hohlkörper hindurch mit dem Substrat (1) verbunden ist.

8. Herstellverfahren für ein mikromechanisches Bauteil mit statischen und beweglichen mikromechanischen Strukturen und elektrischen und/oder mechanischen Verbindungsmitteln zur Verbindung der statischen Strukturen mit einem Substrat mit folgenden Schritten:
- Aufbringen von mindestens einer Schicht (3, 4) mit einer im wesentlichen planaren Oberfläche auf dem Substrat (1),
- Erzeugen von Gräben (5S, 5D, 5R) mit dazwischenliegenden Stegen (4P, 4A) in der Schicht oder in der oberen Schicht (4),
- Auffüllen der Gräben mit dem Material der mikromechanischen Strukturen (6), so daß die Stegoberflächen nicht bedeckt sind,
- Aufbringen einer Zwischenschicht (7) auf der vorliegenden Oberfläche,
- Erzeugen von Löchern (8) zur Aufnahme der Verbindungsmittel in der Zwischenschicht, welche über Stegen (4P) angeordnet sind und Entfernen der so freigelegten Stege (4P) und der darunterliegenden Schicht oder darunterliegender Schichten (4, 3), so daß die Löcher bis zum Substrat oder bis zur unteren Schicht (3) gebildet werden,
- Herstellen der Verbindungsmittel durch Auffüllen der Löcher mit einer Fixierschicht (9), und
- Freilegen der beweglichen mikromechanischen Strukturen (6R) durch Entfernen der Zwischenschicht (7) und der oberen Schicht (4).

9. Herstellverfahren nach Anspruch 8,
**dadurch gekennzeichnet**, daß als untere Schicht (3) eine Isolationsschicht aus Siliziumnitrid und als obere Schicht (4) und als Zwischenschicht (7) eine Isolationsschicht aus Siliziumoxid eingesetzt werden.

10. Herstellverfahren nach einem der Ansprüche 8 bis 9,
**dadurch gekennzeichnet**, daß Gräben mit Vertiefungen zur Aufnahme von Abstandshaltern (6A) an den späteren beweglichen mikromechanischen Strukturen (6R) erzeugt werden.

11. Herstellverfahren nach einem der Ansprüche 8 bis 10,
**dadurch gekennzeichnet**, daß die Gräben (5) in einem nicht selektiven CVD-Verfahren mit Wolfram aufgefüllt werden und dann die Oberfläche mit Hilfe eines Schleifverfahrens (CMP) oder durch anisotropes Rückätzen mindestens bis auf Höhe der Stegoberkanten abgeschliffen oder rückgeätzt wird.

12. Herstellverfahren nach einem der Ansprüche 8 bis 11,
**dadurch gekennzeichnet**, daß die Fixierschicht (9) ganzflächig abgeschieden wird und derart strukturiert wird, daß die späteren beweglichen mikromechanischen Strukturen (6R) durch die Fixierschicht (9S, 9D) wenigstens teilweise überdeckt und gegen Herausfallen gesichert sind.

13. Herstellverfahren nach einem der Ansprüche 8 bis 11,
**dadurch gekennzeichnet**, daß die Fixierschicht (9) selektiv in den Löchern (8) abgeschieden wird.

14. Herstellverfahren nach einem der Ansprüche 8 bis 13,
**dadurch gekennzeichnet**, daß die Löcher (8) oberhalb eines im Substrat (1) angeordneten Kontaktgebiets (2) erzeugt werden und eine elektrisch leitende Fixierschicht (9) eingesetzt wird.

15. Herstellverfahren nach einem der Ansprüche 8 bis 14,
**dadurch gekennzeichnet**, daß die mikromechanischen Strukturen (6) und/oder die Fixierschicht (9) mit einem nicht selektiven CVD-Wolfram-Prozeß hergestellt werden.

## Claims

1. Micromechanical element having
- a static micromechanical structure (6S, 6D),
- a moveable micromechanical structure (6R),
- means (9S, 9D) for mechanically and/or electrically connecting the static structure (6S, 6D) to a substrate (1), which means are formed from a fixing layer (9), and
- a layer or multiple layer (6) which is applied to the substrate (1) and from which the static and the moveable micromechanical structures are formed.

2. Micromechanical element according to Claim 1, characterized in that the moveable micromechanical structure (6R) is secured against dropping out by the connection means (9S, 9D).

3. Micromechanical element according to one of Claims 1 or 2, characterized in that the substrate (1) is covered with an insulation layer (3, 4) with an essentially planar surface and has a contact region (2) for the electrical connecting means (9S).

4. Micromechanical element according to one of Claims 1 to 3, characterized in that the moveable micromechanical structure (6R) on the substrate (1) or on the insulation layer (3) is mounted on spacers (6A) with a small supporting surface.

5. Micromechanical element according to one of Claims 1 to 4, characterized in that the micromechanical structures (6S, 6D, 6R) and/or the connecting means (9S, 9D) are composed essentially of tungsten.

6. Micromechanical element according to one of Claims 1 to 5, characterized by a motor micromechanical element as having an axis of rotation (6D), constructed as a hollow body, and a stator (6S) as static micromechanical structure and with a rotor (6R) as moveable micromechanical structure, which structures are formed from the same conductive layer or multiple layer (6), and
a further conductive layer or multiple layer as fixing layer (9) which at least partially covers the surface of the axis of rotation (6D) and is connected to the substrate through the hollow body, and which at least partially covers the surface of the stator and is connected to the contact region (2) in the substrate (1).

7. Micromechanical element according to one of Claims 1 to 5, characterized by a gear mechanism as micromechanical element with an axis of rotation, constructed as a hollow body, as static micromechanical structure and with a rotor (6R) as moveable micromechanical structure, and
a conductive or non-conductive layer as fixing layer (9) which at least partially covers the surface of the axis of rotation (6D) and is connected to the substrate (1) through the hollow body.

8. Manufacturing method for a micromechanical element with static and moveable micromechanical structures and electrical and/or mechanical connecting means for connecting the static structures to a substrate, having the following steps:
- at least one layer (3, 4) with an essentially planar surface is applied to the substrate (1),
- trenches (5S, 5D, 5R) with intermediate webs (4P, 4A) in the layer or in the top layer (4) are produced,
- the trenches are filled with the material of the micromechanical structures (6) so that the surfaces of the webs are not covered,
- an intermediate layer (7) is applied to the surface which is present,
- holes (8) for receiving the connecting means are produced in the intermediate layer and are arranged over webs (4P), and the webs (4P) which are exposed in this way are removed and the layer or layers (4, 3) located below are removed so that the holes are formed as far as the substrate or as far as the lower layer (3),
- the connecting means are produced by filling the holes with a fixing layer (9), and
- the moveable micromechanical structures (6R) are exposed by removing the intermediate layer (7) and the upper layer (4).

9. Manufacturing method according to Claim 8, characterized in that an insulation layer made of silicon nitride is used as lower layer (3) and an insulation layer made of silicon oxide is used as upper layer (4) and as intermediate layer (7).

10. Manufacturing method according to one of Claims 8 to 9, characterized in that trenches with depressions for receiving spacers (6A) are produced on the later, moveable micromechanical structures (6R).

11. Manufacturing method according to one of Claims 8 to 10, characterized in that the trenches (5) are filled with tungsten in a non-selective CVD method, and the surface is ground away or etched back using a grinding method (CMP) or by means of anisotropic etching, at least as far as the level of the upper edges of the webs.

12. Manufacturing method according to one of Claims 8 to 11, characterized in that the fixing layer (9) is deposited over the entire surface and is structured in such a way that the later moveable micromechanical structures (6R) are at least partially covered, and secured against dropping out, by the fixing layer (9S, 9D).

13. Manufacturing method according to one of Claims 8 to 11, characterized in that the fixing layer (9) is deposited selectively in the holes (8).

14. Manufacturing method according to one of Claims 8 to 13, characterized in that the holes (8) are produced above a contact region (2) which is arranged in the substrate (1), and an electrically conductive fixing layer (9) is used.

15. Manufacturing method according to one of Claims 8 to 14, characterized in that the micromechanical structures (6) and/or the fixing layer (9) are manufactured with a non-selective CVD tungsten process.

## Revendications

1. Pièce micromécanique comportant :
- une structure (6S, 6D) micromécanique statique,
- une structure (6R) micromécanique mobile,
- des moyens (9S, 9D) de liaison mécanique et/ou électrique de la structure (6S, 6D) statique avec un substrat (1), ces moyens étant formés d'une couche (9) d'immobilisation, et
- une couche ou une couche (6) multiple qui est déposée sur le substrat (1) et dans laquelle la structure micromécanique statique et la structure micromécanique mobile sont formées.

2. Pièce micromécanique suivant la revendication 1, caractérisée en ce que la structure (6R) micromécanique mobile est empêchée de tomber par les moyens (9S, 9D) de liaison.

3. Pièce micromécanique suivant l'une des revendications 1 ou 2, caractérisée en ce que le substrat (1) est revêtu d'une couche (3, 4) isolante ayant une surface sensiblement planaire et comporte une zone (2) de contact pour le moyen (9S) de liaison électrique.

4. Pièce micromécanique suivant l'une des revendications 1 à 3, caractérisée en ce que la structure (6R) micromécanique mobile est disposée sur le substrat (1) ou sur la couche (3) isolante sur des entretoises (6A) ayant une petite surface de support.

5. Pièce micromécanique suivant l'une des revendications 1 à 4, caractérisée en ce que les structures (6S, 6D, 6R) micromécaniques et/ou les moyens (9S, 9D) de liaison sont pour l'essentiel en tungstène.

6. Pièce micromécanique suivant l'une des revendications 1 à 5, caractérisée
par un moteur servant de pièce micromécanique comportant un axe (6D) de rotation réalisé en élément creux et un stator (6S), qui sert de structures micromécaniques statiques, et comportant un rotor (6R) qui sert de structures micromécaniques mobiles qui sont formées dans la même couche ou couche (6) multiple conductrice, et
par une couche ou une couche multiple conductrice supplémentaire, qui sert de couche (9) d'immobilisation, qui recouvre au moins partiellement la surface de l'axe (6) de rotation et qui est relié au substrat en passant par l'élément creux; et qui recouvre au moins partiellement la surface du stator et qui est relié à la zone (2) de contact du substrat (1).

7. Pièce micromécanique suivant l'une des revendications 1 à 5, caractérisée par une transmission servant de pièce micromécanique, comportant un axe de rotation réalisé en élément creux, qui sert de structure micromécanique, et comportant un rotor (6R) comme structure micromécanique mobile et par une couche conductrice ou non conductrice, qui sert de couche (9) d'immobilisation et qui recouvre au moins partiellement la surface de l'axe (6D) de rotation et est relié au substrat (1) en passant par l'élément creux.

8. Procédé de fabrication d'une pièce micromécanique comportant des structures micromécaniques statiques et mobiles et des moyens de liaison électrique et/ou mécanique servant à relier les structures statiques à un substrat, comportant les étapes suivantes :
- on dépose au moins une couche (3, 4) ayant une surface sensiblement planaire sur le substrat (1),
- on produit dans la couche ou dans la couche (4) supérieure des sillons (5S, 5D, 5R) comportant des barrettes (4P, 4A) intermédiaires,
- on remplie les sillons du matériau des structures (6) micromécaniques de telle manière que les surfaces des barrettes ne sont pas recouvertes,
- on dépose une couche (7) intermédiaire à la surface présente,
- on ménage dans la couche intermédiaire, pour recevoir les moyens de liaison, des trous (8) qui sont disposés au-dessus des barrettes (4P) et on élimine les barrettes (4P) ainsi dégagées et la couche sous jacente ou les couches (4, 3) sous jacentes, si bien que les trous sont formés jusqu'au substrat ou jusqu'à la couche (3) inférieure,
- on produit les moyens de liaison en remplissant les trous d'une couche (9) d'immobilisation,
- on dégage les structures (6R) micromécaniques mobiles en enlevant la couche (7) intermédiaire et la couche (4) supérieure.

9. Procédé de fabrication suivant la revendication 8, caractérisé en ce que l'on utilise, comme couche (3) inférieure, une couche isolante en nitrure de silicium et comme couche (4) supérieure et, comme couche (7) intermédiaire, une couche isolante en oxyde de silicium.

10. Procédé de fabrication suivant l'une des revendications 8 à 9, caractérisé en ce que l'on produit sur les futures structures (6R) micromécaniques mobiles des sillons comportant des renfoncements pour recevoir des entretoises (6A).

11. Procédé de fabrication suivant l'une des revendications 8 à 10, caractérisé en ce que l'on remplie les sillons (5) de tungstène au cours d'une opération de dépôt en phase vapeur non sélective et on polie ou on attaque en retrait par attaque chimique la surface à l'aide d'un procédé de polissage (CMP) ou par une attaque chimique anisotrope en retrait, au moins jusqu'au niveau des bords supérieurs des barrettes.

12. Procédé de fabrication suivant l'une des revendications 8 à 11, caractérisé en ce que l'on dépose sur toute la surface la couche (9) d'immobilisation et en ce que l'on la structure de telle manière que les futures structures (6R) micromécaniques mobiles sont recouvertes au moins partiellement de la couche (9S, 9D) d'immobilisation et empêchées de tomber.

13. Procédé de fabrication suivant l'une des revendications 8 à 11, caractérisé en ce que l'on dépose la couche (9) d'immobilisation dans les trous (8) de manière sélective.

14. Procédé de fabrication suivant l'une des revendications 8 à 13, caractérisé en ce que l'on ménage les trous (8) au-dessus d'une zone (2) de contact située dans le substrat (1) et en ce que l'on utilise une couche (9) d'immobilisation conductrice de l'électricité.

15. Procédé de fabrication suivant l'une des revendications 8 à 14, caractérisé en ce que l'on produit les structures (6) micromécaniques et/ou la couche (9) d'immobilisation par un procédé de dépôt en phase vapeur de tungstène non sélectif.
